# EUROPEAN PATENT APPLICATION

(11) **EP 1 736 903 A2**
(43) Date of publication of application: **27.12.2006**
(21) Application number: 06253172.8
(22) Date of filing: 20.06.2006
(51) Int. Cl.: G06F 17/30

(54) **System and method for visualizing contextual-numerical data of source document as corresponding transformed documents**

(30) Priority: 20.06.2005 US 691799 P
(71) Applicant: Oculus Info Inc., Toronto, Ontario, M5A 4J5 (CA)
(72) Inventor: Peters, Michael, Toronto, Ontario M5V 3P7 (CA); Brath, Richard, Toronto, Ontario, M4M 2Y9 (CA); Wrath, William, Toronto, Ontario, M6H 3B3 (CA)
(74) Representative: Hibbert, Juliet Jane Grace

(57) **Abstract**

A system and method are provided for visually distinguishing a plurality of numerical elements from a plurality of non-numeric elements in source data, in which the plurality of non-numeric elements providing context for the numerical elements. The system and method comprise the modules and corresponding functionality for selecting a portion of the source data and for identifying the plurality of numerical elements from the plurality of non-numeric elements in the selected portion of the source data according to a recognized format of the numerical elements. The system and method also assign a first shape object to an identified first numerical element of the plurality of numerical elements such that a visual property of the first shape object represents the numerical value of the first numerical element according to a scale, as well as assign a second shape object to an identified second numerical element of the plurality of numerical elements such that the visual property of the second shape object represents the numerical value of the second numerical element according to the scale. The system and method also position the first and second shape objects with respect to a reference surface and assign non-numeric objects to each of the plurality of identified non-numeric elements in the selected portion of the source data. Further, the system and method also position the non-numeric objects with respect to the reference surface for facilitating maintaining the context of the numerical elements for the numerical objects, such that the objects and reference surface are configurable for subsequent display as transformed data or storage in a storage for later retrieval.

## Description

### Background of the Invention

The present invention relates to a visual presentation of non-numeric and numerical data on a user interface.

There is an increasing need to visualize data in cluttered contexts, so as to highlight the numeric portions of document content from textual/image portions. Documents can come in a variety of electronic formats, including Word documents, different spreadsheet types, PDFs, as well as in hard copy forms. It is a challenge to efficiently distinguish numeric portions from textual/image portions of a document, potentially of a variety of different document formats, while at the same time retaining contextual information of the original document.

For example, current charting software such as Excel does provide for display of numerical data contained in a spreadsheet to be subsequently represented in a chart, such as a bar chart. However, there are significant limitations with currently available charting software, including required manual labeling of chart axes and other desired chart text, manual formatting of text (e.g. title and labels) associated with the numeric spreadsheet data, and resolution difficulties in visualizing of large data sets.

### Summary

It is a challenge to efficiently distinguish numeric portions from textual/image portions of a document, potentially of a variety of different document formats, while at the same time retaining contextual information of the original document. Contrary to current systems and methods, a system and method are provided for visually distinguishing a plurality of numerical elements from a plurality of non-numeric elements in source data, in which the plurality of non-numeric elements providing context for the numerical elements. The system and method comprise the modules and corresponding functionality for selecting a portion of the source data and for identifying the plurality of numerical elements from the plurality of non-numeric elements in the selected portion of the source data according to a recognized format of the numerical elements. The system and method also assign a first shape object to an identified first numerical element of the plurality of numerical elements such that a visual property of the first shape object represents the numerical value of the first numerical element according to a scale, as well as assign a second shape object to an identified second numerical element of the plurality of numerical elements such that the visual property of the second shape object represents the numerical value of the second numerical element according to the scale. The system and method also position the first and second shape objects with respect to a reference surface and assign non-numeric objects to each of the plurality of identified non-numeric elements in the selected portion of the source data. Further, the system and method also position the non-numeric objects with respect to the reference surface for facilitating maintaining the context of the numerical elements for the numerical objects, such that the objects and reference surface are configurable for subsequent display as transformed data or storage in a storage for later retrieval.

According to one aspect there is provided a method for visually distinguishing a plurality of numerical elements from a plurality of non-numeric elements in source data, the plurality of non-numeric elements providing context for the numerical elements, the method comprising the steps of: selecting a portion of the source data; identifying the plurality of numerical elements from the plurality of non-numeric elements in the selected portion of the source data according to a recognized format of the numerical elements; assigning a first shape object to an identified first numerical element of the plurality of numerical elements such that a visual property of the first shape object represents the numerical value of the first numerical element according to a scale; assigning a second shape object to an identified second numerical element of the plurality of numerical elements such that the visual property of the second shape object represents the numerical value of the second numerical element according to the scale; positioning the first and second shape objects with respect to a reference surface; assigning non-numeric objects to each of the plurality of identified non-numeric elements in the selected portion of the source data; positioning the non-numeric objects with respect to the reference surface for facilitating maintaining the context of the numerical elements for the numerical objects; wherein the objects and reference surface are configurable for subsequent display as transformed data.

According to further aspect there is provided a system for visually distinguishing a plurality of numerical elements from a plurality of non-numeric elements in source data, the plurality of non-numeric elements providing context for the numerical elements, the system comprising: a data module configured for selecting a portion of the source data and for identifying the plurality of numerical elements from the plurality of non-numeric elements in the selected portion of the source data according to a recognized format of the numerical elements; a transformation module configured for assigning a first shape object to an identified first numerical element of the plurality of numerical elements such that a visual property of the first shape object represents the numerical value of the first numerical element according to a scale, and assigning a second shape object to an identified second numerical element of the plurality of numerical elements such that the visual property of the second shape object represents the numerical value of the second numerical element according to the scale, and assigning non-numeric objects to each of the plurality of identified non-numeric elements in the selected portion of the source data; and a visualization module configured for positioning the first and second shape objects with respect to a reference surface and for positioning the non-numeric objects with respect to the reference surface for facilitating maintaining the context of the numerical elements for the numerical objects; wherein the objects and the reference surface are configurable for subsequent display as transformed data.

According to a still further aspect there is provided a computer program product for visually distinguishing a plurality of numerical elements from a plurality of non-numeric elements in source data, the plurality of non-numeric elements providing context for the numerical elements, the computer program product comprising: a computer readable medium; a data module stored on the computer readable medium and configured for selecting a portion of the source data and for identifying the plurality of numerical elements from the plurality of non-numeric elements in the selected portion of the source data according to a recognized format of the numerical elements; a transformation module coupled to the data module and configured for assigning a first shape object to an identified first numerical element of the plurality of numerical elements such that a visual property of the first shape object represents the numerical value of the first numerical element according to a scale, and assigning a second shape object to an identified second numerical element of the plurality of numerical elements such that the visual property of the second shape object represents the numerical value of the second numerical element according to the scale, and assigning non-numeric objects to each of the plurality of identified non-numeric elements in the selected portion of the source data; and a visualization module coupled to the transformation module and configured for positioning the first and second shape objects with respect to a reference surface and for positioning the non-numeric objects with respect to the reference surface for facilitating maintaining the context of the numerical elements for the numerical objects; wherein the objects and the reference surface are configurable for subsequent display as transformed data.

### Brief Description of the Drawings

It is an object of the present invention to provide a system and method for visual presentation of non-numeric and numerical data on a user interface to obviate or mitigate at least some of the above-mentioned disadvantages.

A better understanding of these and other embodiments of the present invention can be obtained with reference to the following drawings and detailed description of the preferred embodiments by way of example only, in which:
Figure 1 is a block diagram of a data processing system for a visualization tool;
Figure 2 shows further details of the visualization tool of Figure 1;
Figure 3 shows a further example document of the system of Figure 1;
Figure 4a shows a further example of a document of the system of Figure 1;
Figure 4b shows a corresponding generated chart of the document of Figure 4a;
Figure 5 is an example visualization representation of Figure 1 showing Events in Concurrent Time and Space;
Figure 6 shows an example word document of the system of Figure 1;
Figure 7 shows the rendered chart/document of the document of Figure 7;
Figure 8 shows a further example of the transformed document of the system of Figure 1;
Figure 9 shows a further example of the transformed document of the system of Figure 1;
Figure 10a shows an example of rule generation for generating the transformed document of Figure 1;
Figure 10b shows a further example of rule generation for generating the transformed document of Figure 1;
Figure 10c shows a further example of rule generation for generating the transformed document of Figure 1;
Figure 10d shows a further example of rule generation for generating the transformed document of Figure 1;
Figure 10e shows a further example of rule generation for generating the transformed document of Figure 1;
Figure 10f shows a further example of rule generation for generating the transformed document of Figure 1;
Figure 10g shows a further example of rule generation for generating the transformed document of Figure 1;
Figure 10h shows a further example of rule generation for generating the transformed document of Figure 1;
Figure 11 shows a further example of the transformed document of the system of Figure 1;
Figure 12 shows a further example of the transformed document of the system of Figure 1;
Figure 13 shows a further example of the transformed document of the system of Figure 1;
Figure 14 shows a further example of the transformed document of the system of Figure 1;
Figure 15 shows a further example of the transformed document of the system of Figure 1;
Figure 16 shows a further example of the transformed document of the system of Figure 1;
Figure 17 shows a further example of the transformed document of the system of Figure 1;
Figure 18 shows a further example of the source document of the system of Figure 1;
Figure 19 shows a further example of the transformed document of the system of Figure 1; and.
Figure 20 shows an operational example of the system of Figure 1.

It is noted that similar references are used in different figures to denote similar components.

### Detailed Description of the Preferred Embodiments

The following detailed description of embodiments of the system and method for visual presentation of non-numeric and numerical data does not limit the implementation of the system and method to any particular computer programming language. The system and method for visual presentation of non-numeric and numerical data may be implemented in any computer programming language provided that the OS (Operating System) provides the facilities that may support the operating requirements of the system and method. A preferred embodiment is implemented in the C sharp computer programming language (or other computer programming languages in conjunction with Java, C/C++). Any limitations presented would be a result of a particular type of operating system, computer programming language, or data processing system and would not be a limitation of the system and method.

### Overview

The following describes the system and method for automated two/three-dimensional visualization of a source document (spreadsheet and other documents types) including non-numeric and numerical data elements as document content. This data visualization system and methods provide a tool for visualizing the contents of a source document, a spreadsheet for example. In one embodiment, the data visualization system and method visualize original/source spreadsheet data using: a visualization metaphor such as but not limited to two/three-dimensional graphical object(s) consisting of a transformation of numerical values from a selected portion (by a user) of the original spreadsheet to be depicted as either two or three-dimensional graphical numerical objects as shapes (e.g. squares, circles, cubes, cylinders, cones, surfaces, mesh, ribbons, etc); and a text representation of the non-numeric elements (e.g. text and/or images) from the selected portion of a spreadsheet, including cell outlines (where used) and formatting (such as shading, colours, textual formats, date and time formats, borders, etc...) as desired, the graphical objects are projected upon a reference surface (e.g. planar or three dimensional) within a three-dimensional environment. It is recognized that the non-numeric elements in the source document can be considered contextual information for providing a meaning (e.g. labels) for the numerical elements and accordingly the correspondingly generated non-numerical objects are used in the transformed document (e.g. a chart) to provide contextual information for the generated numerical objects. Further, colour coding and/or size/shape of the numerical objects can be used to visually represent the magnitude of the value of the numerical elements obtained from the source document. Colour coding can also include shading underneath or otherwise with respect to the numerical objects, as desired, as well as application of selected texturing.

The two/three-dimensional numerical object(s) (e.g. shapes) and the non-numeric objects (e.g. text representation and images) are used to produce the transformed document, which is subsequently recognizable by the user as representative of the selected portion of the original spreadsheet/document. It is recognized that the graphical non-numeric objects (e.g. text representing text elements of the original spreadsheet) and the graphical numerical objects (representing the magnitude of the numerical elements of the original spreadsheet) can be anchored/placed to their corresponding relative locations (as shown in the original spreadsheet) upon the reference surface in the transformed document, thus facilitating retaining of relative context by the user between content in the original spreadsheet document and the content in the transformed document. Further, it is recognized that the combination of any number of these two/three dimensional numerical objects and non-numeric objects, whether set all within the reference plane/surface or at different angles within a three dimensional space, can be used to form floors and a wall (e.g. providing multiple reference surfaces positioned at various angles with respect to one another) in the transformed document.

Further, the method for visually analyzing and presenting data embedded on the reference plane/surface (e.g. data elements obtained from the original/source text document, a spreadsheet, a slide, etc...) as three-dimensional graphical objects can include: all non-numeric elements (e.g. text and/or images) of the source document as projected upon the reference plane/surface in three-dimensional space of the transformed document as the non-numeric objects; and all numerical elements (representing magnitudes of a measured quantities) of the source document as depicted as graphical numerical objects, of either two or three dimensions, upon the reference plane/surface in three-dimensional space of the transformed document. The numerical values of the numerical elements are depicted in the transformed document by visual attributes of the numerical objects, such as the object's height, color. Further, the graphical numerical objects depicting the numeric values are oriented in three-dimensions to align with their relative location from the source document upon the two-dimensional reference plane/surface projected into the three dimensional space of the transformed document.

### Visualization Environment

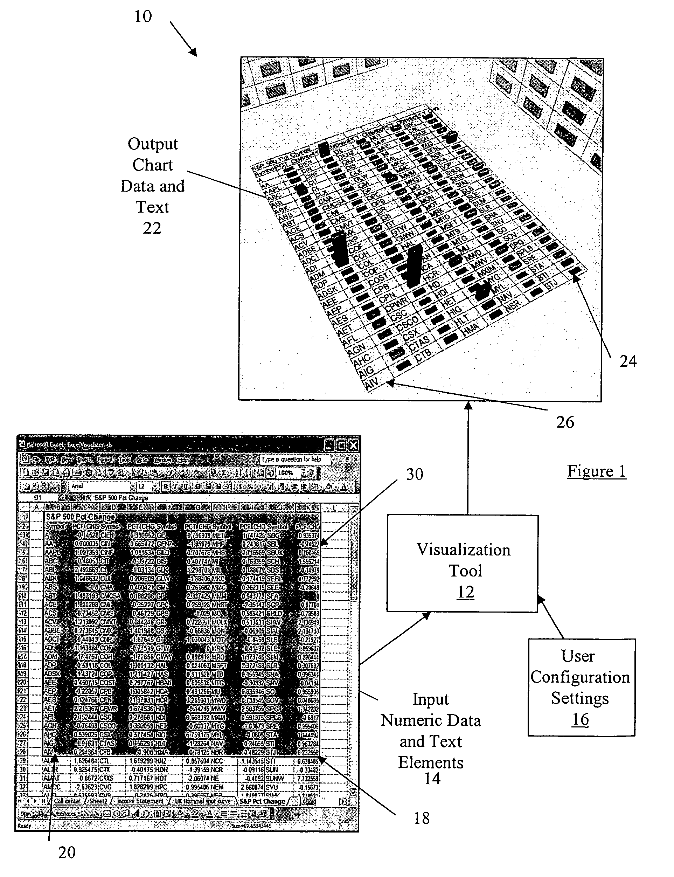

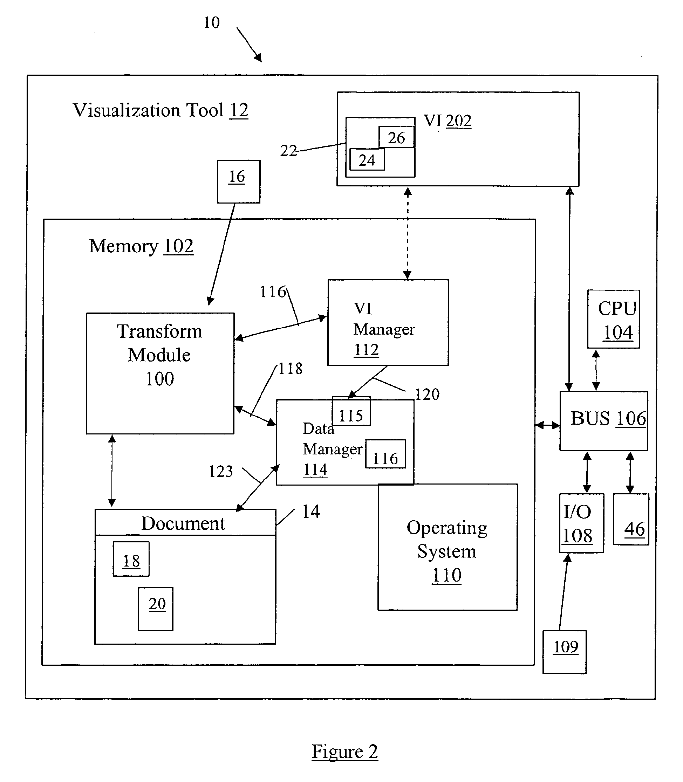

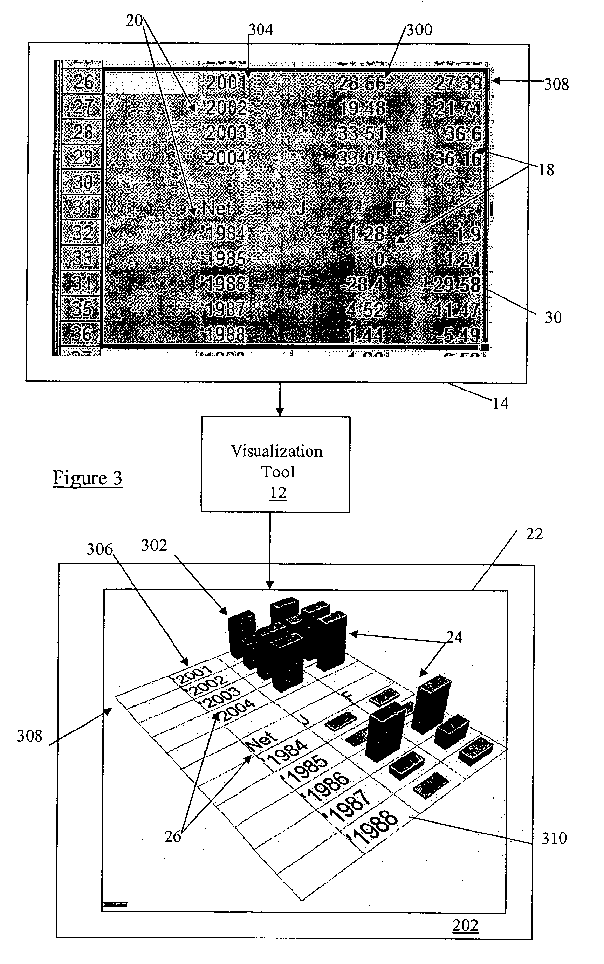

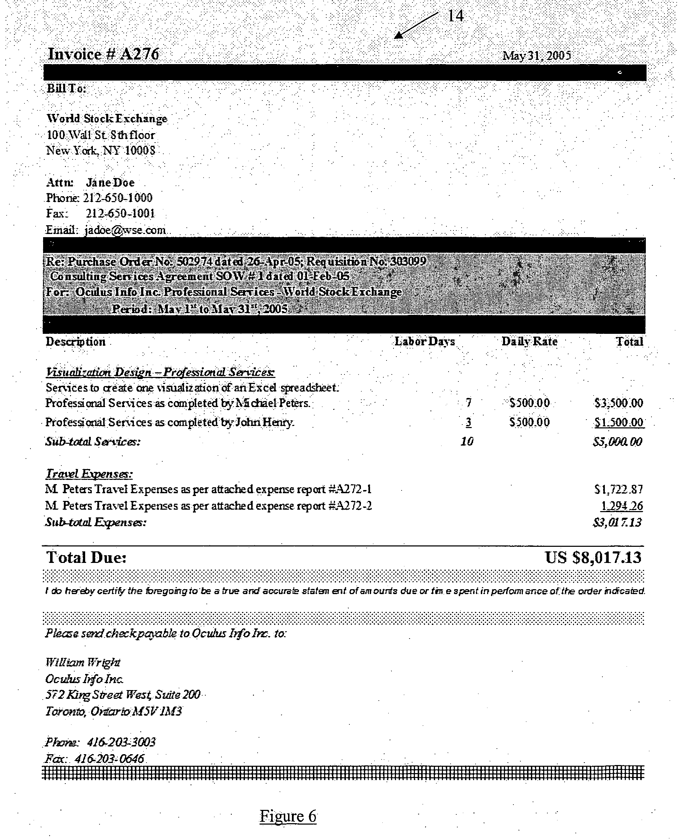

Referring to Figure 1, a visualization data processing system 10 includes a visualization tool 12 for processing a collection of numerical 18 and non-numerical 20 elements (e.g. text and/or images) contained in a source document 14 (e.g. a data source), such as but not limited to a spreadsheet, a Word document (see Figure 6), a PDF document, a web page, streaming data accessed via a network, or a power point document. The non-numeric elements 20 are associated with the numerical elements 18 in the source document 14, so as to provide meaning or other contextual information to the quantitative value of the numerical elements 18. The source document 14 can be an electronic document or a physical document capable of being converted into electronic form (e.g. scanned). The elements 18,20 are processed according to user configuration settings 16 by the tool 12 to generate an output transformed document 22 (e.g. user interactive) containing corresponding transformed graphical numerical objects 24 (e.g. of various shapes) and non-numeric objects 26 on a visual interface (VI) 202 (see Figure 2). The objects 24,26 are positioned on a reference surface 301 (see Figure 3) such that the relative positions between the different objects 24, between the different objects 26, and/or between the different objects 24,26 are maintained. Accordingly, visual resemblance/similarity can be perceived by the user of the tool 12 between the element 18,20 relative positioning in the original document 14 and the object24,26 relative positioning in the transformed document 22. Further, the degree of maintaining this relative positioning of the content between documents 14,22 can be selected by the user and/or configured in configuration settings 16 of the tool 12. It is recognized that strict adherence to absolute values for relative positioning (as provided initially in the source document 14 for the elements 18,20) may result in visual occlusion of objects 24,26 from one another in the transformed document 22, due to the resultant transformed nature of the visual characteristics of the objects 24,26 when the corresponding elements 18,20 are processed by the tool 12.

It is recognized that the source document 14 can also be an electronic data transfer provided to the tool 12 as input data, e.g. streaming stock information or other electronic source of data, that is not a typical document as such. In this case, the data (including elements 18,20) associated with the electronic data transfer could also include positioning information and details usable for determining whether a particular element is numerical or non-numerical in nature. For example, the elements 18,20 could be taken from a web page (e.g. on the Internet) accessed by the tool 12 through a browser (not shown), or taken from a data feed supplied to the tool 12 via an intranet. It is further recognized that the transformed document 22 can be in the form of a chart or other display of visual information presented on a visual interface VI 202 (see Figure 2) and does not have to be provided in a traditional document format. Accordingly, the transformed objects 24,26 on the reference surface 301 could be provided on the tool 12 as a temporary/dynamic display of information (e.g. stock ticker data or other streaming data feed). Accordingly, the transformed objects 24,26 and/or the reference surface 301 can be stored as a traditional document or provided as a transient (e.g. temporary) display on the VI 202. The transformed objects 24,26 and/or the reference surface 301 can also be stored as an image (e.g. screen capture). For example purposes only, the following description of the system 10 is given using the elements 18,20 in the form of the source document 14 (e.g. Word document or spreadsheet) and the objects 24,26 and the reference surface 301 is in the format of a chart in the transformed document 22 (e.g. Word document or spreadsheet).

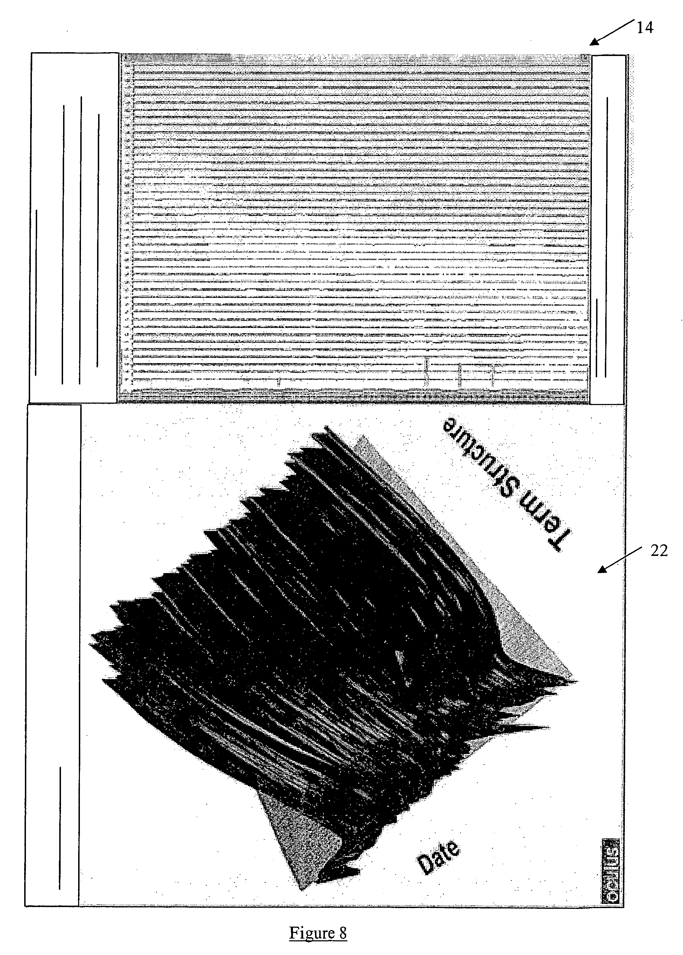

It is recognized that subsequent editing of elements 18,20 in the source document 14 by user events 109 may provide for a real-time automatic update of the corresponding objects 24,26 shown in the transformed document 22 by the tool 12, or vice-versa. It is further recognized that the relative spatial positions of the elements 18,20 in the source document 14 are maintained to a certain degree for the corresponding objects 24,26 in the transformed document 22, however the numerical elements 18 have been converted into the two/three dimensional graphical shape objects 24 while the non-numeric elements 20 can retain their original visual nature (e.g. text, symbol, picture/image) when displayed as the non-numeric objects 26, as perceived by the user of the tool 12 (see the example transformed documents 22 of Figures 8, 9, 10, and 11). It is also recognized that the formatting of the non-numeric elements 20, such as but not limited to font type, font style, font size, font effects (for example the text formatting options provided in Microsoft TM Word documents ― see Figure 6), can also be retained during display of the corresponding non-numeric 26 objects in the transformed document 22, or the formatting of the non-numeric elements 20 can be modified according to the user defined formatting in configuration settings 16 further described below. The configuration settings 16 can be predefined and/or defined during use of the system 10.

### Data processing system

Referring to Figure 2, the data processing system 10 has a user interface 108 for interacting with the tool 12. The user interface 108 is connected to a memory 102 via a BUS 106. The interface 108 is coupled to a processor 104 via the BUS 106, to interact with user events 109 to monitor or otherwise instruct the operation of the tool 12 via an operating system 110. The user interface 108 can include one or more user input devices such as but not limited to a QWERTY keyboard, a keypad, a trackwheel, a stylus, a mouse, and a microphone. The visual interface 202 is considered the user output device, such as but not limited to a computer screen display. If the screen is touch sensitive, then the display can also be used as the user input device as controlled by the processor 104. Further, it is recognized that the data processing system 10 can include a computer readable storage medium 46 coupled to the processor 104 for providing instructions to the processor 104 and/or the tool 12, as well as to provide for input of source documents 14 as well as for storage of resultant transformed documents 22. The computer readable medium 46 can include hardware and/or software such as, by way of example only, magnetic disks, magnetic tape, optically readable medium such as CD/DVD ROMS, and memory cards. In each case, the computer readable medium 46 may take the form of a small disk, floppy diskette, cassette, hard disk drive, solid-state memory card, or RAM provided in the memory 102. It should be noted that the above listed example computer readable mediums 46 can be used either alone or in combination.

Referring again to Figure 2, a transformation module 100 interacts via link 116 with a VI module 112 (also known as a visualization renderer) of the system 10 for presenting the transformed document 22 on the visual interface 202. The transformation module 100 takes numerical 18 and non-numeric 20 elements, as collected for example from a data module 114, from a user selected region 30 (see Figure 1) of the document 14 and then translates/transforms the numerical elements 18 into the corresponding graphical numerical objects 24, transforms the non-numerical elements 20 into the corresponding graphical non-numerical objects 26, as well as associates the relative positions of the non-numeric objects 26 with the numerical objects 24. The relative positions of the numerical elements 24 and the non-numeric elements 26 are also supplied to the transformation module 100 (e.g. by the data module 114) and are processed by the transformation module 100 so as make the relative positioning consistent between the elements 18,20 and the objects 24,26, as perceived by the user. The transformation module 100 interacts via link 118 with the data module 114 of the system 10 to coordinate selection of the elements 18,20 from document(s) 14 in the memory 102. The data module 114 can also receive requests via the user interface 108 for storing, retrieving, amending, or creating the elements 18,20 in the documents 14 and/or directly via link 120 from the VI module 112 in the event the objects 24,26 are modified of otherwise added in the transformed document 22 by the user. It is recognized that the transformed document 22 once created can also be stored in the memory 102 for later access, as desired. The data module 114 manages the numerical 18 and non-numeric 20 elements via link 123 of the documents 14. It is also recognized that the data module 114 can manage the non-numeric objects 26 with the numerical objects 24 via link 123 of the transformed document 22. Accordingly, the module 100 and modules 112, 114 coordinate the processing of the numerical 18 and non-numeric 20 elements, user configuration settings 16, and user events 109 with respect to the content of the transformed document 22 displayed on the visual interface 202. The visualization module 112 renders the final image by including visual numerical objects 24 representing the numeric elements 18 and visual non-numeric objects 26 representing the non-numeric elements 20, for display in the transformed document 22 on the interface 202.

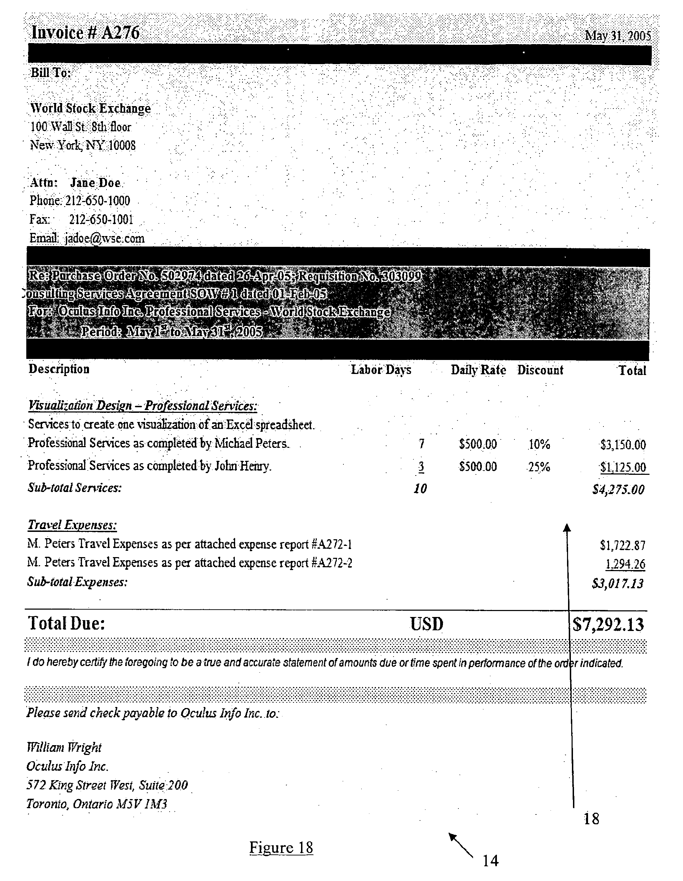

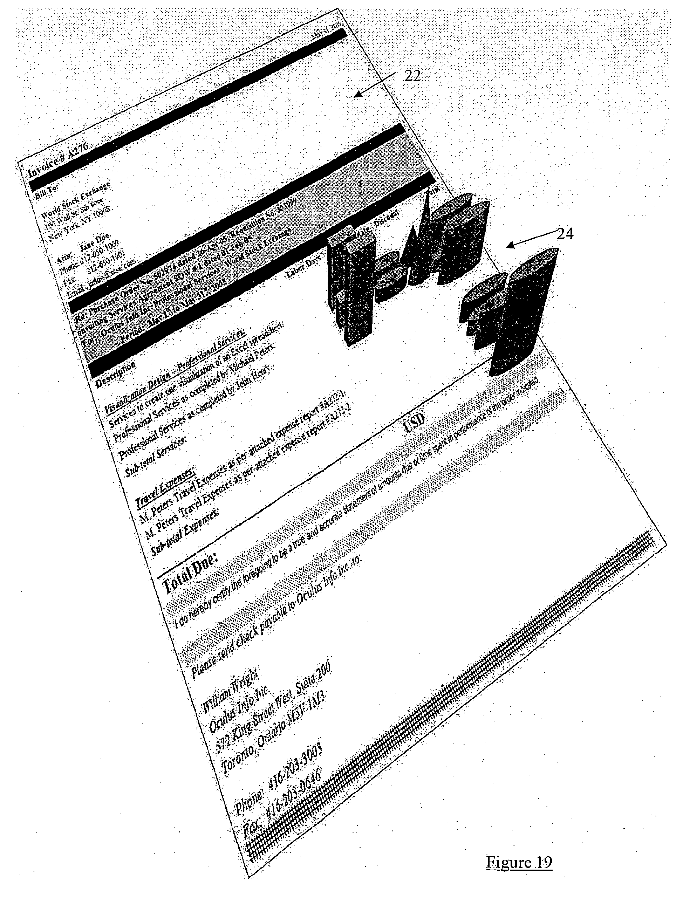

Further, the data module 114 (or other as desired) can be configured with a parser/comparison module 115 for identifying (e.g. using rules 101) all the numerical values of the numerical elements 18 in the source document 14, and then separating different value types into value categories based on formats (e.g. percent, currencies, fractions, integers, etc). The transformation module 100, for example, can use the rules 101 to normalize each numeric category separately and then assign different categories to different visual attributes (e.g. shape or hue) of the objects 24 used to represent the numerical values of the numerical elements 18. The above-described process facilitates visual grouping through Gestalt principle of similarity, for example, and facilitates visual comparison through relative differences between the visuals within any one group. Referring to Figures 18 and 19, an example source document 14 demonstrates the use of groups and visual differences for different categories in order to get the visualization benefit of comparison within groups. For example, note that general #'s, %'s and dollars (elements 18) have been transformed into bars, cones and cylinders shaped numerical objects 24 respectively, and that each set is normalized independently (e.g. 10 vs 25% are comparable; as are all the $ figures).

### Visual Objects 24,26 Generation

The differentiation between numeric elements 18 and non-numeric elements 20 in the document 14 is done by the data module 114. For example, the data module 114 can parse the contents of the document 14 searching for document formatting information in order to identify numeric 18 and non-numeric 20 elements. For example, in spreadsheets, each cell (identified by a unique row and column) has the contents defined by a content format (e.g. numeric, text, or date/time) and this cell content format is stored in the spreadsheet along with the actual cell contents. For example, in parsing the document the data module 114 could find:
1) a cell content "18" formatted as a number (hence identified as a numeric element 18);
2) a cell content "18" formatted as text (hence identified as an non-numeric element 20);
3) a cell content "apples" formatted as text (hence identified as an non-numeric element 20); and
4) a cell content containing a symbol (e.g. bullet, picture) formatted as text (hence identified as an non-numeric element 20).
5) a cell content containing a date value formatted as a number (hence identified as a numerical element 18 or as text (hence identified as non-numeric element 20) depending on the user's preference (e.g. as defined in rules 101 - see Figure 1).

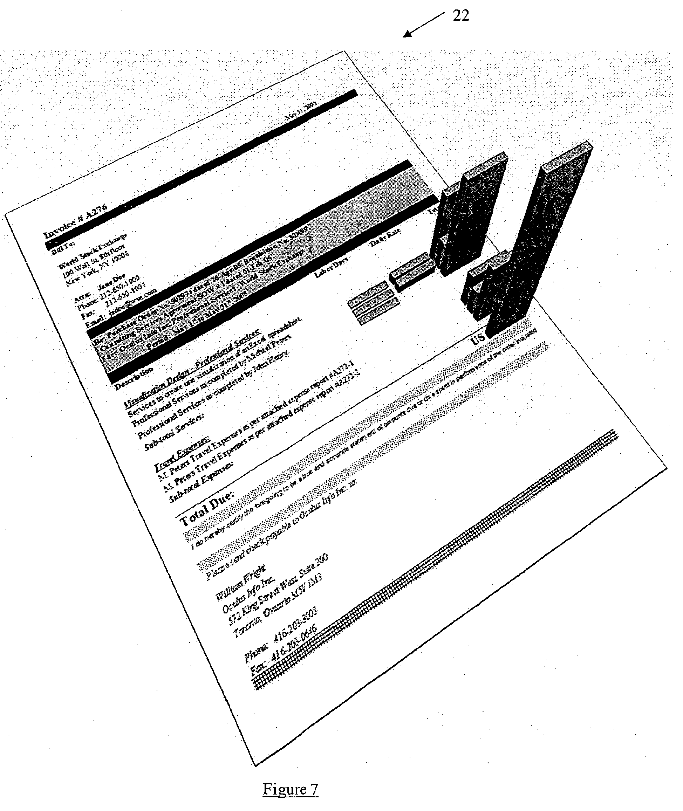

Another option is for the data module 114 to use the specified formatting in the document 14 (e.g. a Microsoft TM Word document) to identify the spatial position and element type (numeric 18 or non-numeric 20). Another option is for the data module 114 to use Optical Character Recognition (OCR) software, as is known in the art, to identify the contents of the document according to element 18,20 type and spatial position of the elements 18,20 relative to one another. Further, tags and attributes of schema defined languages (e.g. HTML, XML, etc.) can be used by the data module 114 to parse the documents 14 for identification of the numerical 18 and non-numerical 20 elements, as well as their relative positioning. This positioning information can be determined by a position module 116 (see Figure 1). The transformation module 100 uses the determined type information of the elements 18,20, in the selected region 30 of the document 14, to decide which elements 18 to translate into corresponding shapes of the numerical objects 24 and which elements 20 to remain in their representation as non-numeric objects 26, as perceived by the user. Referring to Figure 7, an example resultant transformed document 22 (e.g. chart) is shown as rendered by the tool 12 from the Word document 14 of Figure 6.

For example, referring to Figure 3, the user of the tool 12 would perceive the numerical element 300 "28.66"in the document 14 to be the same quantity when represented as a bar object 302 (three dimensional shape) of 28.66 units high in the transformed document 22. Similarly, the user would also perceive the non-numeric element 304 shown as "2001" to represent the same text when represented as the non-numeric object 306 also shown as "2001" in the transformed document 22. It should be noted that the element 304 and object 306 intuitively convey the same contextual information to the user, i.e. that all quantitative values (28.66 and 27.39) adjacent to "2001" in the first row 308 were obtained in the year 2001, whether the user looks at the document 14 or the transformed document 22 when displayed on the VI 202.

In general, the numeric elements 18 are distinguishable from the non-numeric elements 20, as each of the numeric elements 18 has an associated quantitative value/measurement that is relative to the quantitative value/measurement of the other numeric elements 18 on a common scale (or scales in the case of different sets of elements 18). In contrast, the non-numeric elements 20, such as text or other marks, pictures and/or symbols (for example used in a writing system or representation of visual objects) do not have an associated relative quantitative value. The physical dimensions and other visual attributes (e.g. colour, shape, etc...) of the shape objects 24 are used to represent the quantitative value (and qualitative if desired) of the represented numeric element 18 selected from the document 14 (e.g. the number "3.5" as the numeric element 18 is reproduced as a bar shaped object 3.5 units high as the shape numerical object 24). In contrary, the visual characteristics of the non-numeric elements 20 in the document 14 are reproduced as the non-numeric objects 24 in the transformed document 22 (e.g. the text "AGN" as the non-numeric element 20 is reproduced as text "AGN" as the non-numeric object 26).

Referring to again to Figure 3, the selected region 30 of the document 14 (in this case a spreadsheet) is reproduced as the transformed document 22 on the VI 202. It is noted that the relative spacing of the elements 300,304 is similar to that of objects 302,306. Further, the non-numeric elements 20 in general are reproduced as non-numeric objects 26 on the reference plane 310 (or surface) of the transformed document 22, while the numerical elements 18 are reproduced as three dimensional shape numerical objects 24 projecting from the reference plane 310. Again, it is recognized that the relative spatial positioning between the elements 20, between the elements 18, and between the elements 18,20 are maintained in placement of the objects 24,26 in the transformed document 22, either as absolute and/or adjusted relative spatial quantities. The degree of absolute and/or adjusted relative spatial quantities can be predefined by the tool 12 via rules and/or dynamically adjusted manually by the user during generation of the transformed document 22.

### Visualization Tool 12

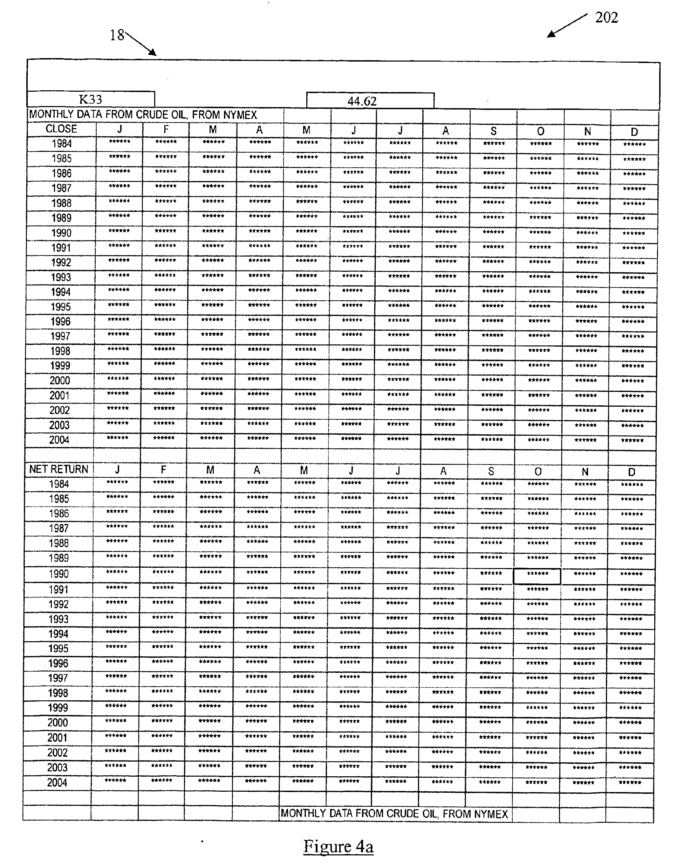

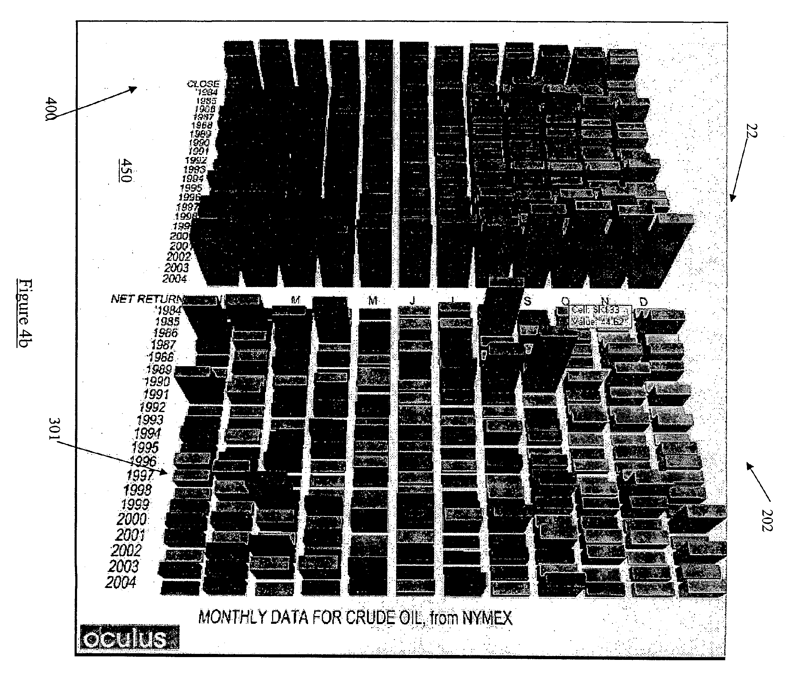

Referring to Figures 4a and 4b, an example visualization on the VI 202 shows a displayed document 14 and corresponding translated transformed document 22, such that preferably the document 14 and transformed document 22 would be displayed side-by-side on the VI 202. A menu 400 is provided to the user of the tool 12 in order to control the display of the document 14 and transformed document 22. For example, the tool 12 provides value in being able to dynamically create a 3D view of the document 14 (e.g. spreadsheet) though the selection of any region 30 (see Figure 1) of cells and have a generated visualization of the magnitudes of the numerical elements 18 as transformed shapes/colours of the numerical objects 24 (subject to a common scale), all of which remain in context of the non-numeric elements 20 represented as the non-numeric objects 26. Just click and drag any selected region 30 and that area is used to generate the transformed document 22 as shown in the visualization interface 202. Change any numbers, formulas, or recalculations in the document 14, including a change in the boundaries of the selected region 30 and the visualization of the transformed document 22 can be updated by the modules 100,114,116. The idea behind the visualization tool 12 can be WYSIWYG (what you see is what you get) spreadsheet visualization ― whatever you see in the original source document 14 is what you get in the visualization of the transformed document 22. Text type elements 20 are displayed as text type objects 26, numerical value elements 18 are displayed as visual shapes objects 24 sized/coloured proportionately to their numeric values. This can work best when all the element 18 values are of the same kind ― e.g. all percent change, or all dollar values; as opposed to a document with numerous different kinds of metrics.

Accordingly, Figures 4a and 4b demonstrate the use of a 3D visualization technique of the source document 14 by: projecting the source document 14 onto a 2D reference surface 301 within a 3D space 450, transforming any extracted numerical values of the numerical elements 18 into 3D numerical objects 24 (e.g. 3D bars), and locating those bars in the appropriate context of the original base document 14, to provide the WYSIWYG document 22 visualization.

For example, whether viewing your own document 14 or one of the examples provided, the first step is to open a selected document 14 using the tool 12 from the "Start" menu of the system 10. Then, without closing that document 14, open any other documents/spreadsheets 14 that you may want to visualize.

### Rule Set-up for Transformation Processing

The following is an example of rules 101 (see Figure 1), either predefined in configuration of the tool 12 and/or dynamically assigned by the user to the elements 18,20 for use by the transformation module 100 in generation of the objects 24,26, i.e. in transformation of selected content of the source document 14 into the transformed content of the transformed document 22. It is recognized that the rules 101 can be used to configure an automated "one-click display" of the transformed document 22. For example, by configurable deciphering and extracting the numeric formats of the numerical elements 18 by the transformation 100 and/or data modules 114 and having default settings in the rules 101, the tool 12 can be configured for "one-click" visualization of the transformed document 22 given the source document 14.

### Set the range rules

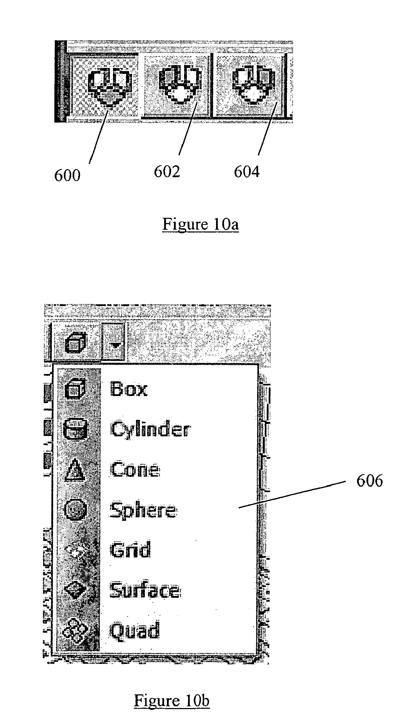

The visualization can have as part of the menu 400 a Floor surface 500 button 600, a Left Wall surface 502 button 602 and a Right Wall surface 504 button 604 (see Figure 10a). Each of the buttons 600,602,604 can be set to different ranges of spreadsheet cells or regions 30 of the document 14. To set a range/region 30, the user can for example use the user interface 108 (see Figure 2) to:
click the button 600,602,604 of the menu 400 for the visual element you want to set - by default, the "Floor" button 600 can be enabled;
select the desired range/region 30 in the document 14;
the visualization of the transformed document 22 updates in the VI 202 to include the translated numerical 18 and non-numeric 20 elements as the objects 24,26 on the selected reference surface 500,502,504; and
to keep the range/region 30 in the visualization locked to the selected range, click the range setting button back to off.

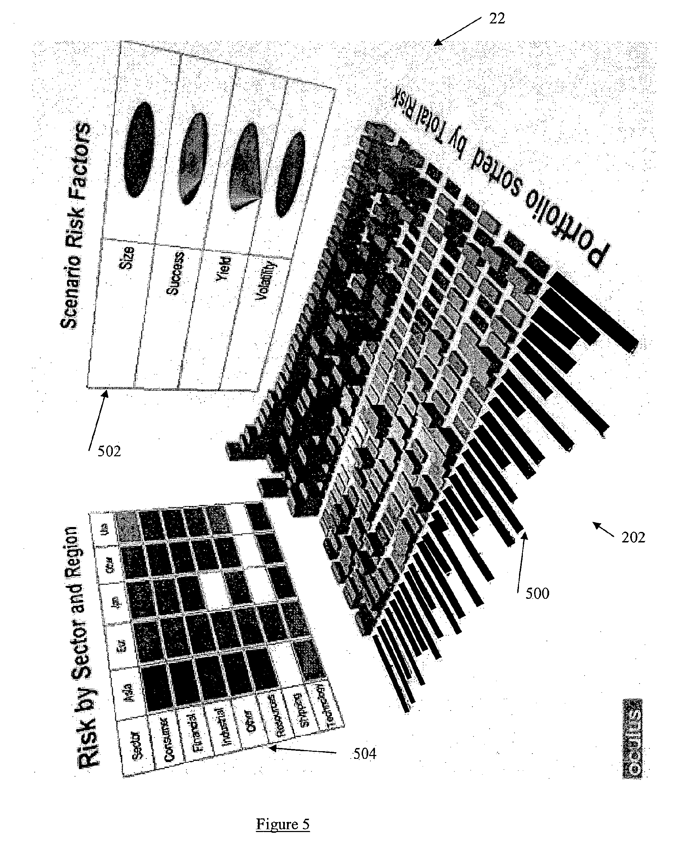

It is recognized that each of the reference planes/surfaces 500,502,504 can (see Figure 5) be used to represent a selected region 30 from the same or different source documents 14.

### Shape rules

Referring to Figure 10b, the visual shape of the objects 24 used to represent the magnitude of the numerical elements 18 may be set to such as but not limited to; boxes, cones, surfaces, etc. To set the shape is similar to setting the range/region 30:
click the button 600,602,604 from the menu 400 for the visual element you want to set ― by default, the "Floor" surface 500 button 600 is enabled; and
click the new shape from the shape menu 606. For example, by default positive numeric values can be selected as green shapes and negative numeric values can be a different colour as for example red shapes).

Further, the menu 606 can also be used to set the desired size of the shapes based on the numerical values of the numerical elements 18. For example, a value scale can be specified with the top of the scale represented by a selected largest size of the shapes and the bottom of the scale represented by the smallest size of the shapes. The shape size between the top and bottom sizes of the scale could be graduated accordingly. Further, the largest and smallest sizes of the shapes could be dictated (dynamically or statically) by the visual density of the adjacent objects 24,26 on the VI 202 and/or the resolution of the VI 202 display, for example.

### Zoom rules

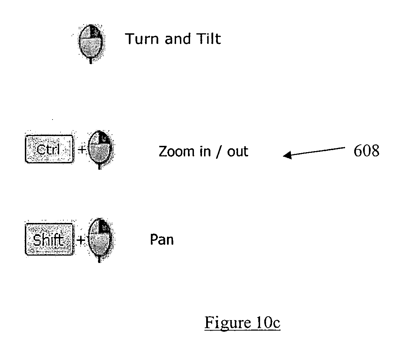

The user can use the buttons 608 of the menu 400, see Figure 10c, to zoom to preset views of the transformed document 22, or simply use a mouse or other input device of the user interface 108. Use of the zoom buttons allows for three-dimensional resizing and panning of the displayed transformed document 22.

### Rules 101 for Setting Other Options

Various options can be configured for the each visual objects 24,26 of the transformed document 22, as generated by the transformation module 100. Here are some example options: Color Rules 610:
Referring to Figure 10d, colour rules 610 can be set by the user to adjust positive/negative colours, as well as to adjust the shading of the colours to facilitate discrimination of values of the numerical objects 24 as a substitute for or in addition to size of the shape used for the numerical objects 24.

### Base rules 612:

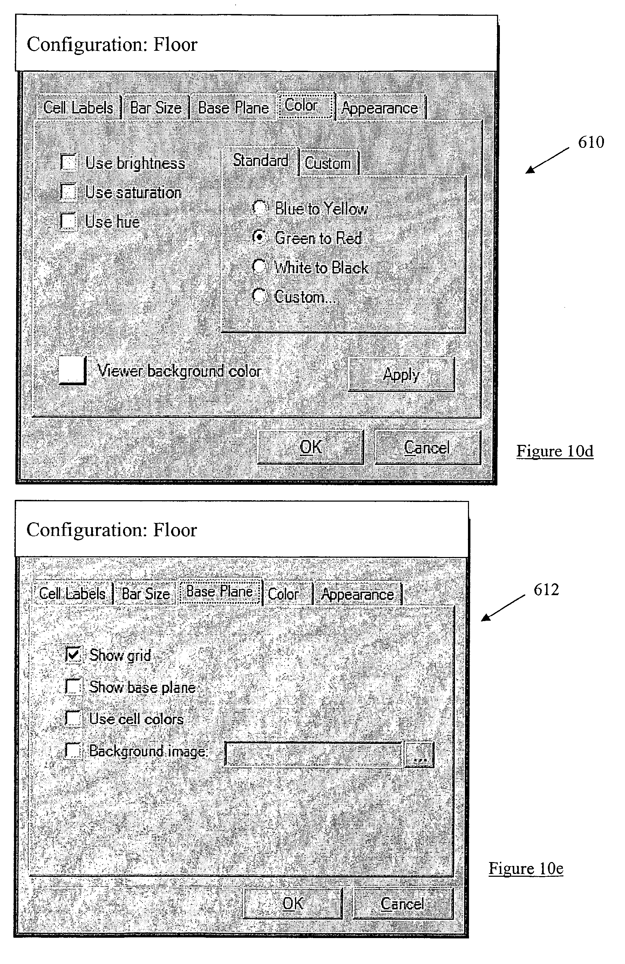

Referring to Figure 10e, base rules 612 can be set by the user to configure the reference surfaces 500,502,504 to: display a base plane/surface 500,502,504; use the cell colours in Excel (facilitates visual grouping), such that the cell colour/format scheme of the document 14 is transferred to the transformed document 22; use font attributes from the document (e.g. as specified by a schema ― HTML, XML); and to display an image file on the base surface 500.

### Text Rules 614:

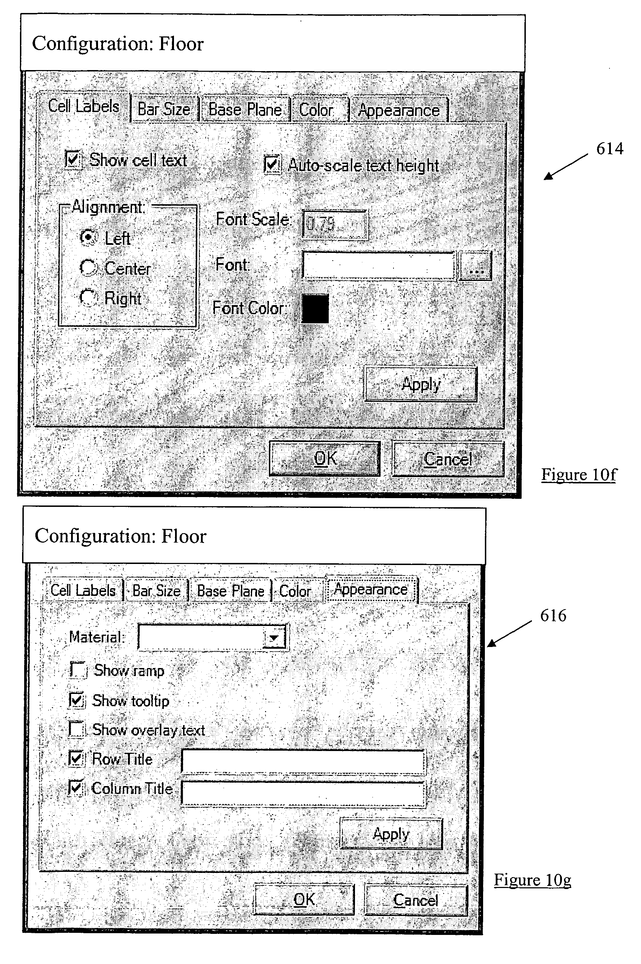

Referring to Figure 10f, text rules 614 can be set by the user to adjust alignment, font, sizes and colours (useful when labels are small and sparse) as different from those from the source document 14.

### Title Rules 616:

Referring to Figure 10g, title rules 616 can be set by the user to create titles along an edge of the transformed document 22 that are not part of the non-numeric elements 20 present in the document 14.

### Size Rules 618:

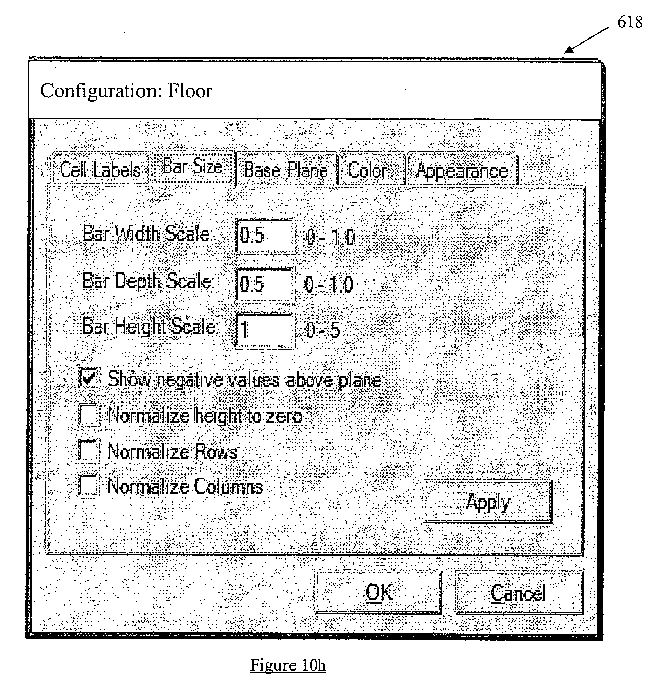

Referring to Figure 10h, size rules 618 can be set by the user to adjust the size of the visual objects 24,26, and to display negative values going up / going down for facilitating comparison of values. Additional rules 618 can be set to define the dimensions of the visual objects 24, 26 (width, depth and relative height for example). Further, normalization rules can be applied to normalize the values by row or column (treating the maximum and minimum for the row or column as 100% and 0% respectively). Normalization rules can also be applied across the field of values and displaying the minimum value as co-planar with the reference surface 301 for purposes of accentuating subtle differences in a range of highly similar numeric values of the numerical objects 24.

### Menus 400

Other example menu 400 selections can include:
- File -> Save Image -> As Jpeg image;
- Options -> All the Options shown above;
- Show ― turn on/off any combination of floor and walls planes/surfaces 500,502,504;
- View ― zoom the viewpoint to the "home" position (overall view); or to the floor, or either wall, or continually animate between the viewpoints; and
- Help ― launches this document 14,22.

### Document 22 Visualization Examples

Examples of document 22 visualization can include the following.

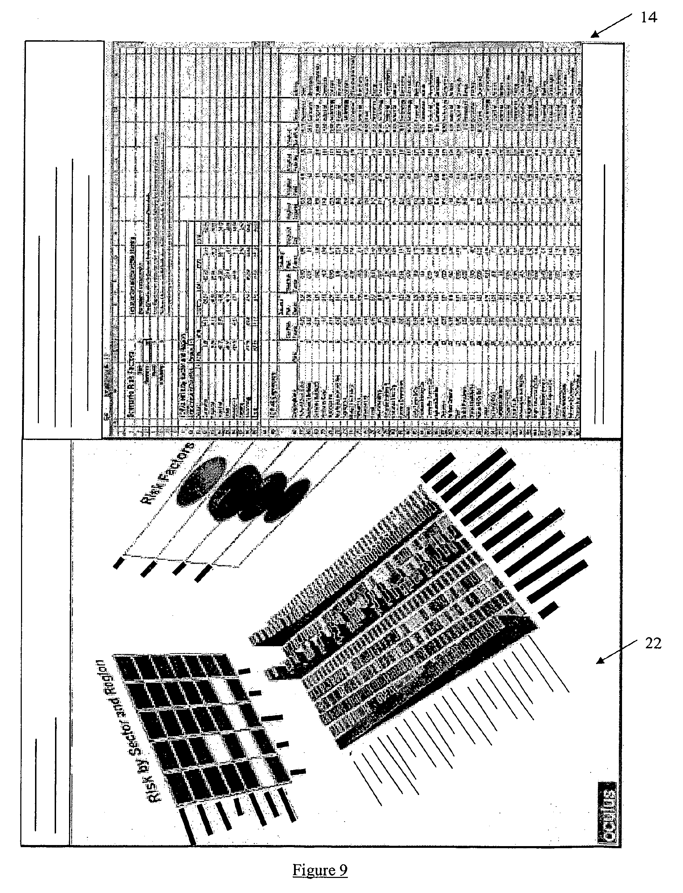

Referring to Figures 8 and 9, example documents 14 and corresponding generated charts as documents 22 are shown.

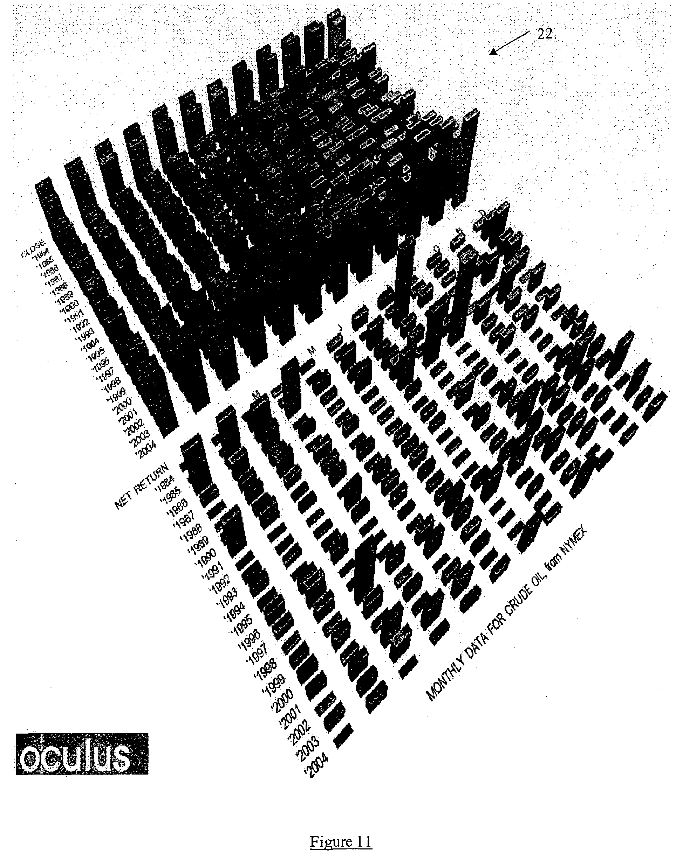

Referring to Figure 11, Monthly Data for Crude Oil from NYMEX is shown. The range shows both the monthly spot price (back), and the monthly net return (foreground). Cell outlines are turned off. Visual patterns, such as the recently increasing price of oil, or lack thereof, such as no common monthly change pattern in net returns, can be immediately obvious when visualized.

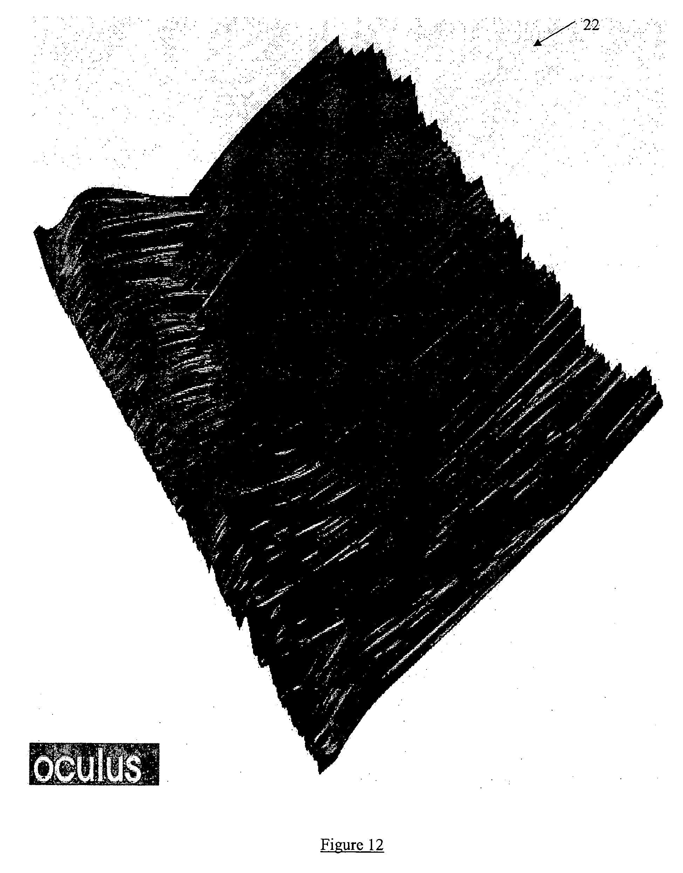

Referring to Figure 12, UK Spot ― Fwd Spread is shown. Huge volumes of data are available when looking at historical trade data. Further, comparing data between two financial instruments (such as spots and forwards ― shown here) or between an instrument and a model, can provide insight into the correlation between instruments and models. Visually viewing these large matrixes of data can make patterns readily apparent.

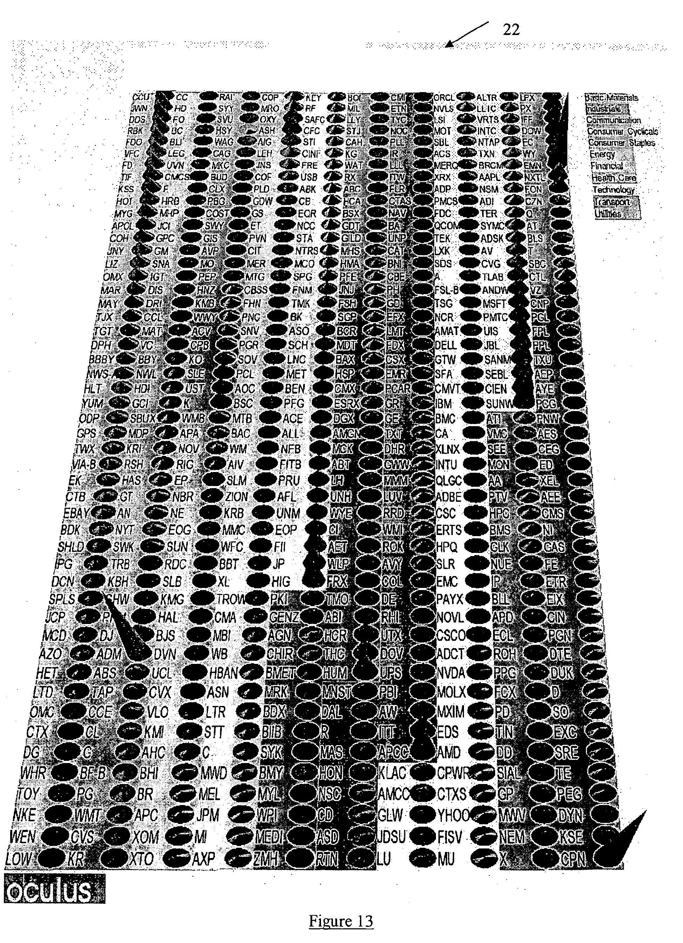

Referring to Figure 13, S&P 500 is shown. When viewing a stock index, such as the S&P 500, visualization can show every stock, not just color codes by sector. Interaction, in this case driven by buttons in Excel, can be used for sorting, and also filtering and other analysis. Here a base plane and cell colours are used to visually identify which stocks belong to which sectors.

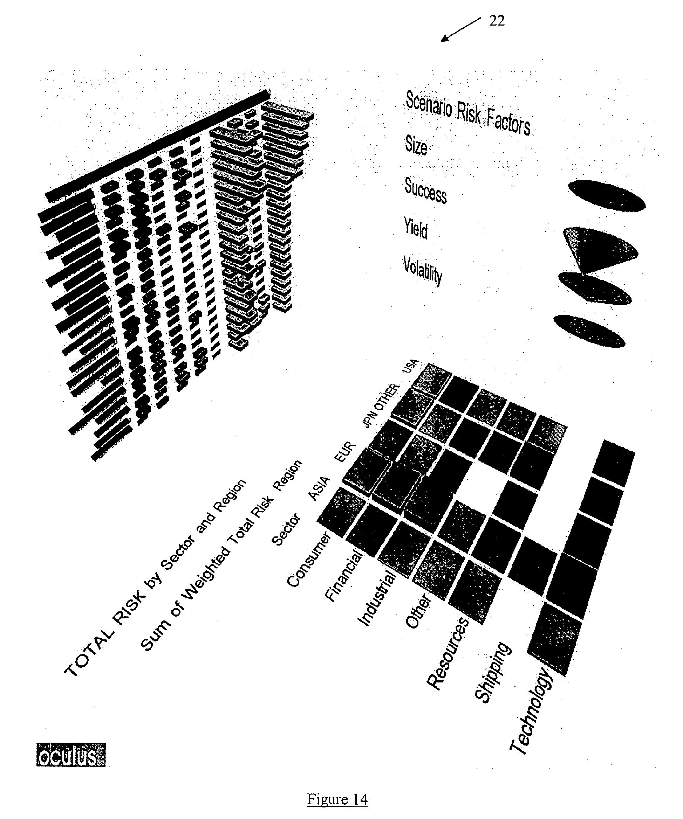

Referring to Figure 14, Risk Sensitivity is shown. Visually analyze a risk model. In this example, 4 sensitivity parameters can be adjusted, which recalculates the risks across the portfolio. Where are the highest risks concentrated? → Create a heatmap out of the sector and region table. What are the top exposures? → Create click and drag the top twenty exposures of the portfolio table.

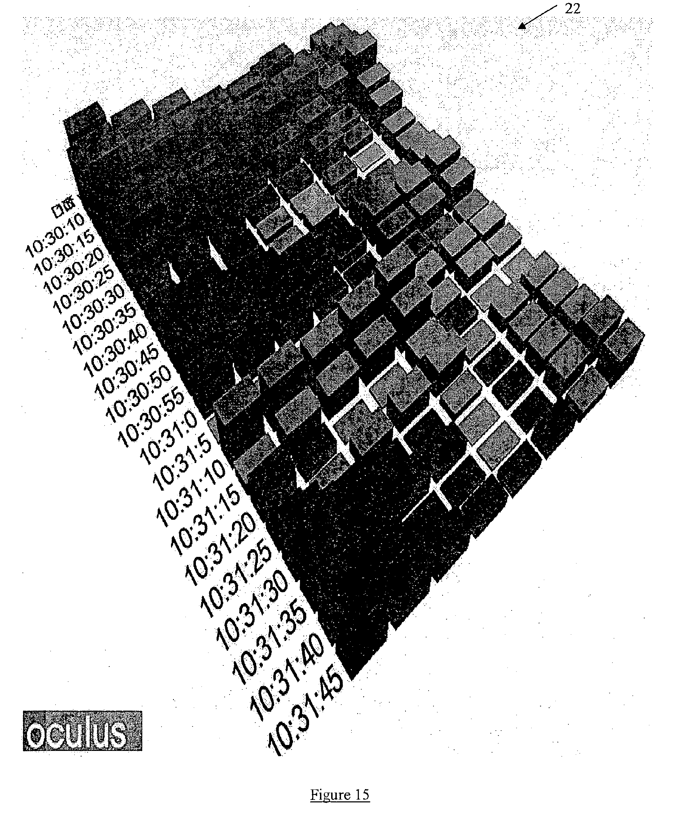

Referring to Figure 15, Curve Shift is shown. See a yield curve update in a real-time simulation. Visually see the shape of the curve dip and twist with new events. The visualization can provide faster insight into the movement of the curve ― is it changing at the short end or long end? Is it twisting? Is it volatile?

### Document 22 for Excel spreadsheet document 14 Visualization examples

Excel Visualization can be quite versatile for creating quick, useful visual analysis, monitoring and presentation of data; which can be further enhanced by adapting and customizing it. Here are examples of Excel visualization adapted for specific uses.

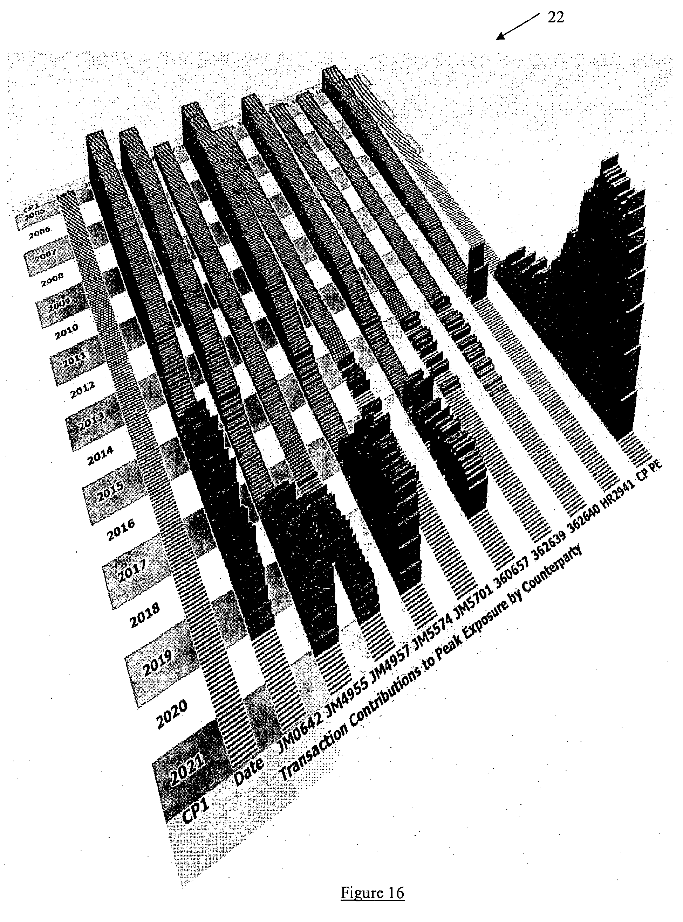

Referring to Figure 16, Modeling is shown. Risk is complex, multi-dimensional and generates large amounts of data. Quadrus Financial generates large spreadsheets, for example, modeling transaction contribution to counterparty exposure from collateralized debt obligations (CDOs). The tool 12 can be applied to this spreadsheet data to create intuitive visuals that facilitate rapid identification of the sources of peak exposures.

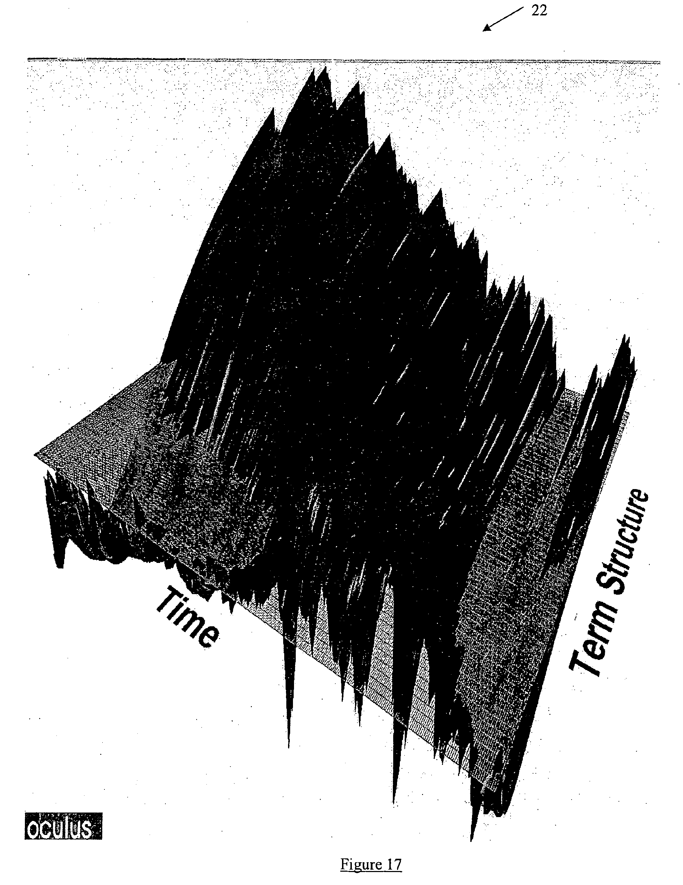

Referring to Figure 17, Analysis is shown. Finding the needle in the haystack is much easier using the tool 12. Suspect data can be highlighted in context so data analysts can best determine causes and action. Being able to reduce VaR by $1M on $10B of assets can generate $16M. The suspect data jumps right out.

Referring to Figure 11, Trading data is shown. Visually evaluate alternative trading strategies. The tools 12 adaptation of Excel to Risk Capital's peak credit exposure spreadsheet enables on-the-fly assessment of user-defined scenarios. The firm creates and compares more scenarios to reduce risk, respond faster and increase deal flow.

Accordingly, a novel process has been described whereby a spreadsheet (or other document 14) user selects a range of cells within a spreadsheet and the visualization immediately creates the three-dimensional object as a chart, without requiring any additional interaction by the spreadsheet user. Location of all elements within the original spreadsheet are located relative to each other in the three-dimensional chart (or other document 22) with the same relationship as set out in the original spreadsheet. Detection, normalization and mapping of numeric values to graphical symbols are automatic. This data visualization system and methods can create visual displays: with fewer steps of user clicking, than required by charts and graphs embedded within existing spreadsheet systems; can show far more data than the charts and graphs embedded within existing spreadsheet systems; can automatically organize the visual elements, automatically provides labels and formatting based on the spreadsheet; can reduce learning time to use the displayed chart, because the location of all elements in the chart is substantially identical (as perceived by the user) to the location previously determined in the spreadsheet; can update immediately when the spreadsheet updates, whether the update is invoked by the user, by a calculation or by a data event; and can operate such that clicks in the chart are passed back to the corresponding cell in the spreadsheet (e.g. cell selection).

It is recognized that any number of three-dimensional graphical elements can be combined within a three dimensional space of any orientation created from any combination of original source documents. Further, the method wherein generating a three-dimensional graphical element comprises of: determining the selected area of the original two-dimensional plane/surface; determining the data elements of the selected area to distinguish between text/images, visual formatting elements such as lines and shading and numerical values; creating the three-dimensional elements consisting of the appropriate generally two-dimensional planar elements of text/images and visual formatting elements such as lines and shading; and normalizing the numeric values and mapping the normalized values onto visual attributes such as size and color of two or three dimensional objects. It is recognized that the text/images of the original source document can be represented in the transformed document as either truly two-dimensional objects (i.e. lying on the reference plane/surface without apparent height off the surface) and/or can be represented in the transformed document as a relief text/image object (i.e. having a perceivable height off the surface such that the perceivable height is minimal as compared to the height of the three-dimensional graphical elements of the numeric data values.

Further, the transformation of the data into graphical symbols can be reconfigured by the user after the automatic process is complete. The user can control how the normalization is completed, choose from different symbol types, etc.

### Tool 12 operation

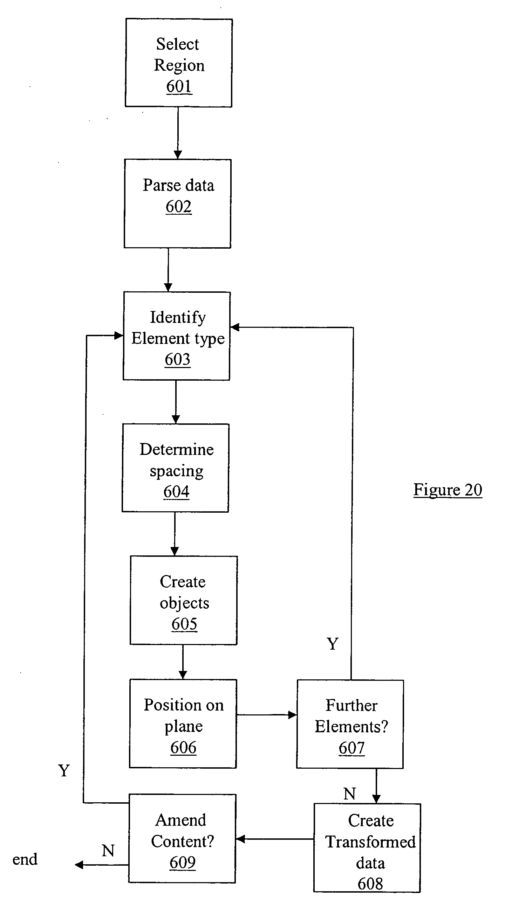

Operation of the tool 12 to generate the chart 22 from selected region(s) 30 of the document(s) 14 can be as follows, referring to Figure 20:
- step 601, User selects the region 30 of the document 14, e.g. a page in a text document or a range of cells;
- step 602, First pass, the data module 114 breaks or otherwise parses the document 14 content into "chunks", such as strings in the text document; or cells in the spreadsheet, i.e. until end of content;
- step 603, parse content, breaking the content into a set of chunks based on delimiters found in the content, e.g. in a text document 14 the delimiters may be periods, line breaks, carriage returns and tabs; in a spreadsheet 14 the delimiters are each cell, for each chunk, record content (i.e. determine numeric 18 or non-numeric 20 element type) of that chunk, formatting of that chunk (e.g. font type, colour, bolding, cell colour, etc...);
- step 604 determine the relative spatial location of that chunk with respect to all other chunks in the parsed document 14 according to a reference point of the document 14 coordinate system (e.g. upper left corner is x=0, y=0);
- step 605, Second pass, for each chunk if chunk is numeric 18 type then create a 3D graphical object (e.g. bar), set size of the shape element 24 (e.g. bar) based on the numeric value/magnitude of the numeric element 18, locate the shape object 24 based on chunk location data onto the plane/surface 500,502,504 of the document 22, if chunk is not numeric 18 type, then create an non-numeric element 26 (e.g. text); set non-numeric object 26 contents to chunk contents, and set any identified formatting of the non-numeric element 20 to match as set in the user configuration 16, and locate non-numeric object 26 on the plane/surface 500,502,504 based on chunk location data from the document 14 in relation to other chunk locations;
- step 606, if chunk contains additional formatting (e.g. shading, patterns of the space surrounding the symbol of the element 18,20), then create a 2D graphical object and set properties to the chunk's formatting, locate this graphical object on the plane/surface 500,502,504 based on chunk location data, location of this graphical object can be slightly above the level of the plane/surface 500,502,504, but slightly below the corresponding non-numeric object 26. This may be done so that the graphical formatting will be beneath the non-numeric object 26 to create the effect of formatting under non-numeric object 26.
- step 607, repeat until all chunks are processed;
- step 608, pass 3D geometry of the translated elements 18,20 to the visualization module 112 to create 3D graphical image of the document 22 to include the objects 24,26 projected in the VI 202;
- step 609, when user modifies any content of the original document 14 within the originally selected range/region 30, repeat process above or for example new geometry may not be not created, rather all the previous objects 24,26 are adjusted if necessary, and new objects 24,26 are created if required, and old objects 24,26 are removed if no longer required.

## Claims

1. A method for visually distinguishing a plurality of numerical elements from a plurality of non-numeric elements in source data, the plurality of non-numeric elements providing context for the numerical elements, the method comprising the steps of:
selecting a portion of the source data;
identifying the plurality of numerical elements from the plurality of non-numeric elements in the selected portion of the source data according to a recognized format of the numerical elements;
assigning a first shape object to an identified first numerical element of the plurality of numerical elements such that a visual property of the first shape object represents the numerical value of the first numerical element according to a scale;
assigning a second shape object to an identified second numerical element of the plurality of numerical elements such that the visual property of the second shape object represents the numerical value of the second numerical element according to the scale;
positioning the first and second shape objects with respect to a reference surface;
assigning non-numeric objects to each of the plurality of identified non-numeric elements in the selected portion of the source data;
positioning the non-numeric objects with respect to the reference surface for facilitating maintaining the context of the numerical elements for the numerical objects;
wherein the objects and reference surface are configurable for subsequent display as transformed data.

2. The method of claim 1 further comprising the step of determining a first relative position between the first numerical element and the non-numeric elements and determining a second relative position between the second numerical element and the non-numeric elements, the first and second relative positions for use in positioning the first shape object and the second shape object on the reference surface with respect to the positioning of the corresponding non-numerical objects.

3. The method of claim 2, wherein the first relative position is determined using at least one of the non-numeric elements.

4. The method of claim 2, wherein the second relative position is determined using at least one of the non-numeric elements.

5. The method of claim 2 further comprising the step of assigning the first shape object to a first shape category based on a format type of the first numerical element.

6. The method of claim 5 further comprising the step of assigning the second shape object to a second shape category based on a format type of the second numerical element, the first category being different from the second category.

7. The method of claim 5 further comprising the step of selecting the visual property of the first category selected from the group comprising: colour and size of the first shape object.

8. The method of claim 7, wherein the visual property is three dimensional in nature.

9. The method of claim 5, wherein the source data is selected from the group comprising: a text document; a power point document; a spreadsheet; and a PDF document.

10. The method of claim 5, wherein the source data is selected from the group comprising: a data feed and displayed data.

11. The method of claim 5, wherein the non-numeric elements are selected from the group comprising: text; and images.

12. The method of claim 5 further comprising the step of storing the transformed data in a storage for subsequent retrieval.

13. A system for visually distinguishing a plurality of numerical elements from a plurality of non-numeric elements in source data, the plurality of non-numeric elements providing context for the numerical elements, the system comprising:
a data module configured for selecting a portion of the source data and for identifying the plurality of numerical elements from the plurality of non-numeric elements in the selected portion of the source data according to a recognized format of the numerical elements;
a transformation module configured for assigning a first shape object to an identified first numerical element of the plurality of numerical elements such that a visual property of the first shape object represents the numerical value of the first numerical element according to a scale, and assigning a second shape object to an identified second numerical element of the plurality of numerical elements such that the visual property of the second shape object represents the numerical value of the second numerical element according to the scale, and assigning non-numeric objects to each of the plurality of identified non-numeric elements in the selected portion of the source data; and
a visualization module configured for positioning the first and second shape objects with respect to a reference surface and for positioning the non-numeric objects with respect to the reference surface for facilitating maintaining the context of the numerical elements for the numerical objects;
wherein the objects and the reference surface are configurable for subsequent display as transformed data.

14. The system of claim 13 further comprising a position module configured for determining a first relative position between the first numerical element and the non-numeric elements and determining a second relative position between the second numerical element and the non-numeric elements, the first and second relative positions for use in positioning the first shape object and the second shape object on the reference surface with respect to the positioning of the corresponding non-numerical objects.

15. The system of claim 14, wherein the first relative position is determined using at least one of the non-numeric elements.

16. The system of claim 14, wherein the second relative position is determined using at least one of the non-numeric elements.

17. The system of claim 14 further comprising a comparison module configured for assigning the first shape object to a first shape category based on a format type of the first numerical element.

18. The system of claim 17 further comparison module configured for assigning the second shape object to a second shape category based on a format type of the second numerical element, the first category being different from the second category.

19. The system of claim 17 further comprising the step of selecting the visual property of the first category selected from the group comprising: colour and size of the first shape object.

20. The method of claim 17, wherein the transformed data is of a form selected from the group comprising: a stored document and a display.

21. A computer program product for visually distinguishing a plurality of numerical elements from a plurality of non-numeric elements in source data, the plurality of non-numeric elements providing context for the numerical elements, the computer program product comprising:
a computer readable medium;
a data module stored on the computer readable medium and configured for selecting a portion of the source data and for identifying the plurality of numerical elements from the plurality of non-numeric elements in the selected portion of the source data according to a recognized format of the numerical elements;
a transformation module coupled to the data module and configured for assigning a first shape object to an identified first numerical element of the plurality of numerical elements such that a visual property of the first shape object represents the numerical value of the first numerical element according to a scale, and assigning a second shape object to an identified second numerical element of the plurality of numerical elements such that the visual property of the second shape object represents the numerical value of the second numerical element according to the scale, and assigning non-numeric objects to each of the plurality of identified non-numeric elements in the selected portion of the source data; and
a visualization module coupled to the transformation module and configured for positioning the first and second shape objects with respect to a reference surface and for positioning the non-numeric objects with respect to the reference surface for facilitating maintaining the context of the numerical elements for the numerical objects;
wherein the objects and the reference surface are configurable for subsequent display as transformed data.
